# EUROPÄISCHE PATENTSCHRIFT

(11) **EP 2 381 134 B1**
(45) Veröffentlichungstag und Bekanntmachung des Hinweises auf die Patenterteilung: **12.12.2012**
(21) Anmeldenummer: 11156597.4
(22) Anmeldetag: 02.03.2011
(51) Int. Cl.: F16H 61/02, F16H 45/02, F16H 61/04

(54) **Verfahren zur Schaltsteuerung eines automatisierten Schaltgetriebes**
Method for controlling the shifting of an automated transmission
Procédé de commande de changement de vitesse d'une boîte de vitesse automatisée

(30) Priorität: 22.04.2010 DE 102010028077
(43) Veröffentlichungstag der Anmeldung: 26.10.2011
(73) Patentinhaber: ZF Friedrichshafen AG, 88038 Friedrichshafen (DE)
(72) Erfinder: Schneider, Florian, 88161, Lindenberg (DE); Mair, Roland, 88069, Tettnang (DE)

(56) Entgegenhaltungen:
- EP-A2- 1 914 449
- WO-A1-02/088564
- WO-A1-2004/048167
- DE-A1- 10 045 337
- DE-A1- 10 343 972
- DE-U- 6 915 757

## Beschreibung

Die Erfindung betrifft ein Verfahren zur Schaltsteuerung eines automatisierten Schaltgetriebes gemäß dem Oberbegriff des Patentanspruchs 1, wie offenbart in der Anmeldung WO 02/088 564.

In Kraftfahrzeugen kommen immer häufiger automatisierte Schaltgetriebe zur Anwendung, bei denen die Gangwahl, die Auslösung von Schaltvorgängen und das Ein- und Auslegen der Gänge automatisiert, d.h. durch die Auswertung von Betriebsparametern in einem Getriebesteuergerät und die Ansteuerung zugeordneter Stellantriebe, erfolgen. Häufig besteht bei derartigen Schaltgetrieben zudem die Möglichkeit, dass der Fahrer Schaltungen auch manuell auslösen kann, wobei diese üblicherweise auf ihre Zulässigkeit überprüft und nur bei Einhaltung vorgegebener Betriebsgrenzen, wie z.B. vorgegebenen Mindest- und Höchstdrehzahlen des Antriebsmotors, ausgeführt werden.

Vorliegend wird von einer an sich bekannten Getriebebauart ausgegangen, bei der Schaltungen im Unterschied zu so genannten Lastschaltgetrieben, wie Planeten-Automatgetrieben und Doppelkupplungsgetrieben, mit einer Zug- bzw. Schubkraftunterbrechung verbunden sind. Derartige Schaltgetriebe sind zumeist in Vorgelegebauweise ausgeführt und weisen eine einzige Eingangswelle auf, die üblicherweise über eine automatisierte Reibungskupplung, wie z.B. eine passiv schließbare Ein- oder Mehrscheiben-Trockenkupplung oder eine aktiv schließbare Lamellenkupplung, mit der Triebwelle des Antriebsmotors verbindbar bzw. von dieser trennbar ist.

Eine derartige Reibungskupplung dient sowohl als Anfahrelement als auch als Schaltkupplung. Als Anfahrelement überbrückt die Reibungskupplung bei Anfahrvorgängen im Schlupfbetrieb die Drehzahldifferenz zwischen der Triebwelle des Antriebsmotors und der Eingangswelle des Schaltgetriebes. Dasselbe gilt für ein Rangieren, Kriechen und Fahren mit niedriger Geschwindigkeit, wenn hierzu kein entsprechend hoch übersetzter Kriechgang zur Verfügung steht. Als Schaltkupplung wird die Reibungskupplung zu Beginn eines Schaltvorgangs vollständig geöffnet, um das lastfreie Auslegen des eingelegten Lastgangs und das lastfreie Synchronisieren sowie Einlegen des Zielgangs zu ermöglichen, und nachfolgend wieder vollständig geschlossen.

Da der mechanische Verschleiß und die thermische Belastung einer Reibungskupplung im Schlupfbetrieb mit zunehmender Fahrzeugmasse und bei erhöhter Zuglast des Antriebsmotors stark ansteigen, stehen für schwere Nutzfahrzeuge verschiedene Bauarten hydrodynamischer Anfahrelemente zur Verfügung, die ein weitgehend verschleißfreies Anfahren und Rangieren ermöglichen.

Während bei Stadtbussen häufig Planeten-Automatgetriebe in Verbindung mit einem vorgeschalteten hydrodynamischen Drehmomentwandler zum Einsatz kommen, wie z.B. der Ecomat® der ZF Friedrichshafen AG, ist für besonders schwere Nutzfahrzeuge, wie z.B. Kranfahrzeuge und Schwerlastzugmaschinen, unter anderem die Kombinationen eines automatisierten Schaltgetriebes mit einer vorgeschalteten Wandlerschaltkupplung vorgesehen, wie z.B. das TC-Tronic® - Getriebe der ZF Friedrichshafen AG.

Bei einer Wandlerschaltkupplung handelt es sich um einen mit einer Überbrückungskupplung versehenen hydrodynamischen Drehmomentwandler und eine diesem antriebstechnisch nachgeordnete Trennkupplung, bei welcher der Drehmomentwandler bei geöffneter Überbrückungskupplung und geschlossener Trennkupplung als Anfahrelement und die Trennkupplung bei geschlossener Überbrückungskupplung als Schaltkupplung dienen. Bei Bedarf einer verschleißfreien Dauerbremse ist bei den vorgenannten Antriebssträngen die Anordnung eines separaten Retarders erforderlich, was weniger vorteilhaft mit einem erhöhten Bauraumbedarf und Gewicht des Antriebsstrangs verbunden ist.

Dagegen ist mit dem "VIAB" (Verschleißfreies Integriertes Anfahr- und Bremselement) der Voith Turbo AG eine Bauart eines hydrodynamischen Anfahrelementes mit integriertem Retarder bekannt, das allgemein als hydrodynamisches Anfahr- und Bremselement bezeichnet werden kann. Es handelt sich dabei um eine mit einer Überbrückungskupplung versehene hydrodynamische Kupplung, deren Turbinenrad über eine Freilaufkupplung mit einer mit der Eingangswelle eines antriebstechnisch nachgeordneten Schaltgetriebes verbundenen Zwischenwelle verbindbar und über eine Turbinenbremse gegenüber einem Gehäuse abbremsbar ist.

Bei diesem Anfahr- und Bremselement, dessen schematischer Aufbau in der DE 100 45 337 A1 anhand der dortigen Fig. 2 beschrieben ist, dient die hydrodynamische Kupplung bei geöffneter Überbrückungskupplung sowie geöffneter Turbinenbremse als Anfahrelement, und bei geschlossener Überbrückungskupplung sowie geschlossener Turbinenbremse und demzufolge festgebremstem sowie über die entsperrte Freilaufkupplung von der Zwischenwelle entkoppelten Turbinenrad als Retarder. Das zwischen dem Pumpenrad und dem Turbinenrad übertragene Antriebs- oder Bremsmoment ist über den Füllungsgrad, d.h. die in dem das Pumpenrad und das Turbinenrad aufnehmenden Torusraum enthaltene Fluidmenge, regelbar.

Bei einem dem vorgenannten "VIAB" ähnlichen hydrodynamischen Anfahr- und Bremselement, das in der DE 69 15 757 U anhand der dortigen Fig. 2 und in der DE 100 45 337 A1 anhand der dortigen Fig. 5b beschrieben ist, wird anstelle der hydrodynamischen Kupplung ein hydrodynamischer Drehmomentwandler verwendet. Bei diesem bekannten Anfahr- und Bremselement dient der Drehmomentwandler bei geöffneter Überbrückungskupplung sowie geöffneter Turbinenbremse als Anfahrelement, und bei geschlossener Überbrückungskupplung sowie geschlossener Turbinenbremse als Retarder. Das zwischen dem Pumpenrad und dem Turbinenrad übertragene Drehmoment kann über den Füllungsgrad und gegebenenfalls auch über eine Verstellung der Schaufeln des zwischen dem Pumpenrad und dem Turbinenrad angeordneten Umlenkrades geregelt werden. Gegenüber einer hydrodynamischen Kupplung weist der hydrodynamische Drehmomentwandler bei hoher Drehzahldifferenz zwischen dem Pumpenrad und dem Turbinenrad, d.h. insbesondere bei Fahrzeugstillstand, eine Drehmomentüberhöhung von bis zu 2,5 auf, wodurch auch bei einem schwächeren Antriebsmotor eine relativ hohe Anfahrsteigfähigkeit und eine hohe Anfahrbeschleunigung verfügbar ist.

Erfolgt bei einer Kombination eines automatisierten Schaltgetriebes mit einem der beiden vorgenannten Bauarten eines hydrodynamischen Anfahr- und Bremselementes eine Hochschaltung, so muss nach dem Lastabbau und dem Auslegen des zuvor lastführenden Lastgangs zunächst der einzulegende Zielgang synchronisiert werden, d.h. durch Abbremsen der Eingangswelle auf eine entsprechende Zieldrehzahl ein Synchronlauf an der Gangkupplung des Zielgangs hergestellt werden, bevor der Zielgang durch Einrücken der betreffenden Gangkupplung eingelegt werden kann.

Die Synchronisierung des Zielgangs erfolgt bei einer Ausführung des Schaltgetriebes mit sperrsynchronisierten Gangkupplungen über die zugeordnete Reibsynchronisierung und bei einer Ausführung des Schaltgetriebes mit unsynchronisierten Gangkupplungen, so genannten Klauenkupplungen, zumeist über eine mit der Eingangswelle in Triebverbindung stehende Getriebebremse. Da diese getriebeinternen Synchronisiereinrichtungen in der Regel nicht dafür ausgelegt sind, auch das Turbinenrad des vorgeschalteten Anfahr- und Bremselementes gegen dessen Massenträgheitsmoment und das an diesem gegebenenfalls noch wirksame Antriebsmoment abzubremsen, wird üblicherweise zunächst das Turbinenrad durch eine Betätigung der Turbinenbremse durch die Entsperrung der Freilaufkupplung von der Zwischenwelle entkoppelt und auf die Zieldrehzahl der Eingangswelle oder eine geringfügig niedrigere Drehzahl abgebremst, bevor die getriebeinterne Synchronisierung des Zielgangs über die zugeordnete Reibsynchronisierung oder die Getriebebremse erfolgt. Nach dem Erreichen der Zieldrehzahl durch die Eingangswelle wird der Zielgang eingelegt und in dem nachfolgenden Lastaufbau das von dem Antriebsmotor erzeugte und über das hydrodynamische Anfahr- und Bremselement in die Eingangswelle übertragene Drehmoment wieder erhöht.

Durch diesen sequenziellen Ablauf der Synchronisierung wird jedoch die Dauer der Hochschaltung und insbesondere der Zug- bzw. Schubkraftunterbrechung ungünstig verlängert. Dies kann im Fall einer Zughochschaltung bei hohem Fahrwiderstand, z.B. bei einer Fahrt an einer steilen Steigung oder im Gelände, zu einer starken Verzögerung des Kraftfahrzeugs und infolgedessen zu einer Korrekturschaltung in einen niedrigeren Gang oder sogar zu einem Fahrzeugstillstand mit anschließender Anfahrt führen. Bei einer Schubhochschaltung an einem steilen Gefälle kann das Kraftfahrzeug dagegen stark beschleunigt werden, was ein starkes Abbremsen des Kraftfahrzeugs oder eine Korrekturschaltung in einen niedrigeren Gang erforderlich machen kann.

Der vorliegenden Erfindung liegt daher die Aufgabe zugrunde, ein Verfahren zur Schaltsteuerung eines automatisierten Schaltgetriebes mit einem vorgeschalteten hydrodynamischen Anfahr- und Bremselement der eingangs genannten Art vorzuschlagen, mit dem bei einer Hochschaltung die Dauer der schaltungsbedingten Zug- oder Schubkraftunterbrechung und damit der gesamten Schaltung verkürzt werden kann.

Diese Aufgabe ist in Verbindung mit den Merkmalen des Oberbegriffs des Anspruchs 1 dadurch gelöst, dass das Abbremsen der Eingangswelle über die getriebeinterne Synchronisiereinrichtung schon während des Abbremsens des Turbinenrades über die Turbinenbremse um einen vorab bestimmten Zeitverzug Δt_{V} nach dem Einschalten der Turbinenbremse begonnen wird, und dass die getriebeinterne Synchronisiereinrichtung während des Abbremsens der Eingangswelle derart angesteuert wird, dass die Eingangswelle bis zum Erreichen einer vorgegebenen Referenzdrehzahl n_{Ref} durch das Turbinenrad eine vorgegebene Mindestdrehzahldifferenz Δnₘᵢₙ zu dem Turbinenrad nicht unterschreitet.

Vorteilhafte Ausgestaltungen und Weiterbildungen des erfindungsgemä-βen Verfahrens sind Gegenstand der Unteransprüche.

Die Erfindung geht daher aus von einem Kraftfahrzeug, insbesondere einem Nutzfahrzeug, dessen Antriebsstrang einen als Verbrennungsmotor ausgebildeten Antriebsmotor und ein automatisiertes Schaltgetriebe umfasst, dessen Eingangswelle über ein spezielles Anfahrelement mit der Triebwelle des Antriebsmotors in Verbindung steht. Das Anfahrelement ist als ein mit einem Pumpenrad und einem Turbinenrad versehenes hydrodynamisches Anfahr- und Bremselement ausgebildet, dessen Pumpenrad über eine Überbrückungskupplung unmittelbar mit einer mit der Getriebeeingangswelle verbundenen Zwischenwelle verbindbar ist, und dessen Turbinenrad über eine Freilaufkupplung mit der Zwischenwelle verbindbar sowie über eine Turbinenbremse gegenüber einem Gehäuse abbremsbar ist. Die Basis des hydrodynamischen Anfahr- und Bremselementes kann sowohl durch eine hydrodynamische Kupplung als auch durch einen hydrodynamischen Drehmomentwandler gebildet sein.

Bei einer Hochschaltung, d.h. einer Zug- oder Schubhochschaltung, sollen zur Synchronisierung des Zielgangs das Turbinenrad weitgehend über die Turbinenbremse und die Eingangswelle weitgehend über eine getriebeinterne Synchronisiereinrichtung auf die Zieldrehzahl n_{Ziel} abgebremst werden. Hierdurch wird eine Überlastung der getriebeinternen Synchronisiereinrichtung vermieden, die bei einer Ausführung des Schaltgetriebes mit sperrsynchronisierten Gangkupplungen durch die der Gangkupplung des Zielgangs zugeordnete Reibsynchronisierung und bei einer Ausführung des Schaltgetriebes mit unsynchronisierten Gangkupplungen zumeist durch eine mit der Eingangswelle in Triebverbindung stehende Getriebebremse gebildet ist.

Um die Dauer der schaltungsbedingten Zug- bzw. Schubkraftunterbrechung und damit des gesamten Schaltungsablaufs zu verkürzen, ist erfindungsgemäß vorgesehen, dass das Abbremsen der Eingangswelle bzw. der eingangsseitigen Getriebewellen des Schaltgetriebes über die getriebeinterne Synchronisiereinrichtung schon während des Abbremsens des Turbinenrades über die Turbinenbremse um einen vorab bestimmten Zeitverzug Δt_{V} nach dem Einschalten der Turbinenbremse begonnen wird, und dass die getriebeinterne Synchronisiereinrichtung während des Abbremsens der Eingangswelle derart angesteuert wird, dass die Eingangswelle bis zum Erreichen einer vorgegebenen Referenzdrehzahl n_{Ref} durch das Turbinenrad eine vorgegebene Mindestdrehzahldifferenz Δnₘᵢₙ zu dem Turbinenrad nicht wesentlich unterschreitet.

Durch die dadurch erzielte parallel verlaufende Abbremsung des Turbinenrades und der Eingangswelle wird eine deutliche Verkürzung der Zug- bzw. Schubkraftunterbrechung und damit des gesamten Schaltungsablaufs erreicht. Dabei wird durch das Einhalten der als Sicherheitspuffer dienenden Mindestdrehzahldifferenz Δnₘᵢₙ zu dem Turbinenrad durch die Eingangswelle sichergestellt, dass unter Berücksichtigung von möglichen Signalungenauigkeiten und Verzögerungen bei der Ansteuerung der getriebeinternen Synchronisiereinrichtung die Eingangswellendrehzahl n_{GE} zumindest bis zum Erreichen der Referenzdrehzahl n_{Ref} durch das Turbinenrad über der Turbinenraddrehzahl n_{T} liegt, definiert durch n_{GE} > n_{T}, so dass die Freilaufkupplung so lange entsperrt und damit das Turbinenrad von der Eingangswelle entkoppelt ist.

Als Referenzdrehzahl n_{Ref} wird bevorzugt die Zieldrehzahl n_{Ziel} der Hochschaltung verwendet, definiert durch n_{Ref} = n_{Ziel}. In diesem Fall wird nach dem Erreichen der Zieldrehzahl n_{Ziel} durch das Turbinenrad die Turbinenbremse abgeschaltet und die Eingangswelle danach bis zum Erreichen der Zieldrehzahl n_{Ziel} weiter über die getriebeinterne Synchronisiereinrichtung abgebremst.

Es ist jedoch auch möglich, dass eine um eine Restdrehzahldifferenz Δn_{Rest} oberhalb der Zieldrehzahl n_{Ziel} gelegene Drehzahl als Referenzdrehzahl n_{Ref} verwendet wird, definiert durch n_{Ref} = n_{Ziel} + Δn_{Rest}, ab der das gemeinsame Abbremsen des Turbinenrades und der Eingangswelle über die getriebeinterne Synchronisiereinrichtung möglich ist, d.h. ohne die Reibsynchronisierung oder die Getriebebremse zu überlasten.

Im zuletzt genannten Fall kann vorgesehen sein, dass schon nach dem Erreichen der Referenzdrehzahl n_{Ref} durch das Turbinenrad die Turbinenbremse abgeschaltet wird, und das Turbinenrad und die Eingangswelle danach bis zum Erreichen der Zieldrehzahl n_{Ziel} gemeinsam über die getriebeinterne Synchronisiereinrichtung abgebremst werden.

Alternativ dazu ist es jedoch auch möglich, dass nach dem Erreichen der Referenzdrehzahl n_{Ref} durch das Turbinenrad zunächst das Turbinenrad über die Turbinenbremse und die Eingangswelle über die getriebeinterne Synchronisiereinrichtung, gegebenenfalls bis zum Erreichen der Zieldrehzahl n_{Ziel}, weiter abgebremst werden, und dass erst dann, wenn die Eingangswelle die Mindestdrehzahldifferenz Δnₘᵢₙ zu dem Turbinenrad vor Erreichen der Zieldrehzahl n_{Ziel} durch das Turbinenrad erreicht oder unterschritten hat , definiert durch n_{GE} ≤ n_{T} + Δnₘᵢₙ, die Turbinenbremse abgeschaltet wird, und das Turbinenrad und die Eingangswelle danach bis zum Erreichen der Zieldrehzahl n_{Ziel} gemeinsam über die getriebeinterne Synchronisiereinrichtung abgebremst werden.

Der Zeitverzug Δtᵥ bis zum Beginn des Abbremsens der Eingangswelle über die getriebeinterne Synchronisiereinrichtung wird auf einen minimalen Zeitverzug Δt_{V}_ₘᵢₙ festgelegt, wenn der erwartete oder einzustellende Drehzahlgradient dn_{GE}/dt der Eingangswelle absolut kleiner oder gleich dem Drehzahlgradienten dn_{T}/dt des Turbinenrades ist , definiert durch | dn_{GE}/dt | ≤ | dn_{T}/dt |. Hierdurch ergibt sich die kürzestmögliche Dauer des Schaltungsablaufs und der Zug- oder Schubkraftunterbrechung. Es versteht sich in Kenntnis der Erfindung von selbst, dass der minimale Zeitverzug Δt_{V}_ₘᵢₙ so bestimmt sein muss, dass die Eingangswelle die Mindestdrehzahldifferenz Δnₘᵢₙ zu dem Turbinenrad zu Beginn der Betätigung der getriebeinternen Synchronisiereinrichtung nicht unterschreitet. Im weiteren Verlauf des Abbremsens der Eingangswelle ist dies dann durch den entsprechenden Drehzahlgradienten dn_{GE}/dt der Eingangswelle sichergestellt.

Bei einem erwarteten oder einzustellenden Drehzahlgradienten dn_{GE}/dt der Eingangswelle, der absolut größer als der Drehzahlgradient dn_{T}/dt des Turbinenrades ist, definiert durch | dn_{GE}/dt | > |dn_{T}/dt |, d.h. wenn die Eingangswelle schneller als das Turbinenrad abgebremst wird, wird der Zeitverzug Δtᵥ ausgehend von dem minimalen Zeitverzug Δt_{V}_ₘᵢₙ zweckmäßig proportional zur Differenz der beiden Drehzahlgradienten, definiert durch | dn_{GE}/dt - dn_{T}/dt | und der zu überbrückenden Gesamtdrehzahldifferenz, definiert durch Δn_{ges} = n_{Start} - n_{Ziel} oder der Drehzahldifferenz, definiert durch Δn = n_{Start} - n_{Ref} zwischen der Startdrehzahl n_{Start} und der Referenzdrehzahl n_{Ref} erhöht. Hierdurch wird zwar die Dauer des Schaltungsablaufs und der Zug- bzw. Schubkraftunterbrechung geringfügig verlängert, aber ein vorzeitiges Erreichen der Turbinenraddrehzahl n_{T} durch die Eingangswelle und demzufolge ein vorzeitiges Ankoppeln des Turbinenrades an die Eingangswelle vermieden.

Trotz der vorgenannten Maßnahmen kann es aufgrund von Signalfehlern und Steuerungsungenauigkeiten dennoch dazu kommen, dass die Eingangswelle die vorgegebene Mindestdrehzahldifferenz Δnₘᵢₙ zu dem Turbinenrad vor dem Erreichen der Referenzdrehzahl n_{Ref} durch das Turbinenrad erreicht oder unterschreitet, definiert durch n_{GE} ≤ n_{T} + Δnₘᵢₙ. In diesem Fall ist zweckmäßig vorgesehen, dass die getriebeinterne Synchronisiereinrichtung für eine vorab festgelegte Wartezeit Δt_{W} abgeschaltet und danach wieder auf das vorherige Bremsmoment eingestellt wird, wodurch die Drehzahldifferenz zwischen der Eingangswelle und dem Turbinenrad wieder erhöht und damit ein vorzeitiges, durch das Sperren der Freilaufkupplung verursachtes Ankoppeln des Turbinenrades an die Eingangswelle vermieden wird.

Zur Verdeutlichung der Erfindung ist der Beschreibung eine Zeichnung mit verschiedenen Ausführungsbeispielen beigefügt. In dieser zeigt
- Fig. 1: einen ersten erfindungsgemäßen Synchronisierungsablauf bei einer Hochschaltung anhand der Drehzahlverläufe der Ein-gangswelle eines automatisierten Schaltgetriebes und des Turbinenrads eines diesem vorgeschalteten hydrodynamischen Anfahr- und Bremselements,
- Fig. 2: einen zweiten erfindungsgemäßen Synchronisierungsablauf bei einer Hochschaltung anhand der Drehzahlverläufe der Ein-gangswelle eines automatisierten Schaltgetriebes und des Turbinenrads eines diesem vorgeschalteten hydrodynamischen Anfahr- und Bremselements,
- Fig. 3: einen dritten erfindungsgemäßen Synchronisierungsablauf bei einer Hochschaltung anhand der Drehzahlverläufe der Ein-gangswelle eines automatisierten Schaltgetriebes und des Turbinenrads eines diesem vorgeschalteten hydrodynamischen Anfahr- und Bremselements,
- Fig. 4: einen vierten erfindungsgemäßen Synchronisierungsablauf bei einer Hochschaltung anhand der Drehzahlverläufe der Ein-gangswelle eines automatisierten Schaltgetriebes und des Turbinenrads eines diesem vorgeschalteten hydrodynamischen Anfahr- und Bremselements,
- Fig. 5: einen fünften erfindungsgemäßen Synchronisierungsablauf bei einer Hochschaltung anhand der Drehzahlverläufe der Ein-gangswelle eines automatisierten Schaltgetriebes und des Turbinenrads eines diesem vorgeschalteten hydrodynamischen Anfahr- und Bremselements,
- Fig. 6: einen bekannten Synchronisierungsablauf bei einer Hochschaltung anhand der Drehzahlverläufe der Eingangswelle eines automatisierten Schaltgetriebes und des Turbinenrads eines diesem vorgeschalteten hydrodynamischen Anfahr- und Bremselements,
- Fig. 7: eine erste Bauart eines hydrodynamischen Anfahr- und Bremselements zur Anwendung des erfindungsgemäßen Verfahrens, und
- Fig. 8: eine zweite Bauart eines hydrodynamischen Anfahr- und Bremselements zur Anwendung des erfindungsgemäßen Verfahrens.

Die vorliegende Erfindung geht von einem automatisierten Schaltgetriebe mit einer Eingangswelle 3 aus, die über ein hydrodynamisches Anfahr- und Bremselement 2, 2' mit der Triebwelle 1 eines als Verbrennungsmotor ausgebildeten Antriebsmotors in Verbindung steht.

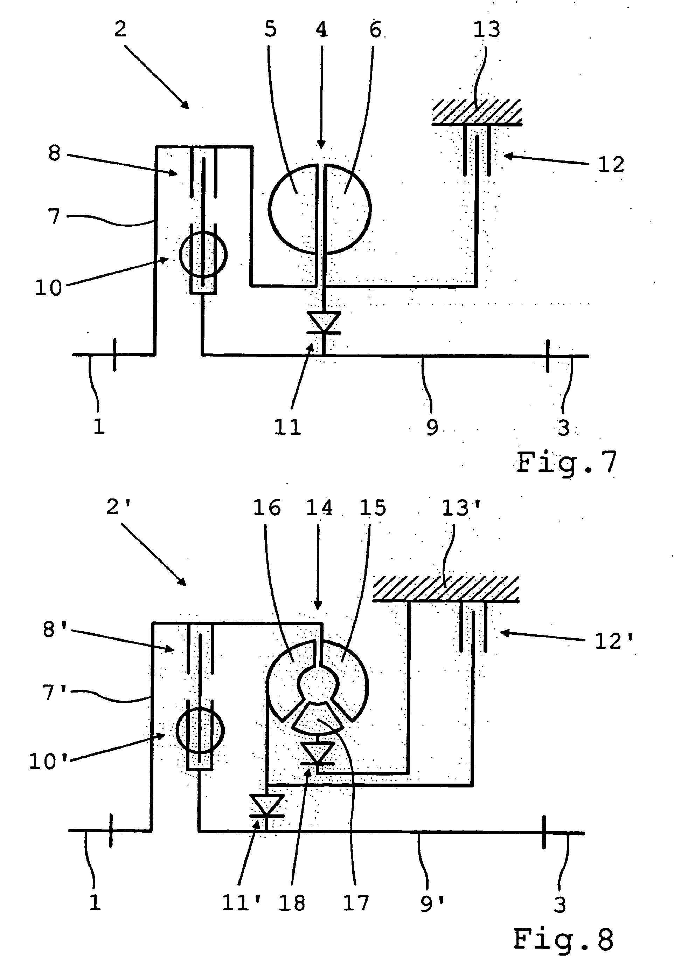

In einer ersten Ausführungsform nach Fig. 7 basiert das hydrodynamische Anfahr- und Bremselement 2 auf einer hydrodynamischen Kupplung 4, die ein Pumpenrad 5 und ein Turbinenrad 6 aufweist. Das Pumpenrad 5 ist über ein Eingangselement 7 drehfest mit der Triebwelle 1 des nicht näher dargestellten Antriebsmotors verbunden. Das Eingangselement 7 und damit sowohl die Triebwelle 1 des Antriebsmotors als auch das Pumpenrad 5 sind über eine Überbrückungskupplung 8 mit einer Zwischenwelle 9 verbindbar, die mit einem Drehschwingungsdämpfer 10 versehen und drehfest mit der Eingangswelle 3 des nicht näher dargestellten Schaltgetriebes verbunden ist. Das Turbinenrad 6 ist über eine Freilaufkupplung 11 drehfest mit der Zwischenwelle 9 und damit mit der Eingangswelle 3 verbindbar. Die Freilaufkupplung 11 sperrt bei einer Drehmomentübertragung von dem Turbinenrad 6 in die Zwischenwelle 9 und entsperrt bei schneller drehender Zwischenwelle 9. Zudem ist das Turbinenrad 6 über eine Turbinenbremse 12 gegenüber einem Gehäuse 13 abbremsbar und arretierbar.

In einer zweiten Ausführungsform nach Fig. 8 basiert das hydrodynamische Anfahr- und Bremselement 2' auf einem hydrodynamischen Drehmomentwandler 14, der ein Pumpenrad 15, ein Turbinenrad 16 und ein zwischen dem Pumpenrad 15 und dem Turbinenrad 16 angeordnetes Umlenkrad 17 aufweist. Das Pumpenrad 15 ist über ein Eingangselement 7' drehfest mit der Triebwelle 1 des nicht näher dargestellten Antriebsmotors verbunden. Das Eingangselement 7' und damit sowohl die Triebwelle 1 des Antriebsmotors als auch das Pumpenrad 15 sind über eine Überbrückungskupplung 8' mit einer Zwischenwelle 9' verbindbar, die mit einem Drehschwingungsdämpfer 10' versehen und drehfest mit der Eingangswelle 3 des nicht näher dargestellten Schaltgetriebes verbunden ist. Das Turbinenrad 16 ist über eine Freilaufkupplung 11' drehfest mit der Zwischenwelle 9' und damit mit der Eingangswelle verbindbar. Die Freilaufkupplung 11' sperrt bei einer Drehmomentübertragung von dem Turbinenrad 16 in die Zwischenwelle 9' und entsperrt bei schneller drehender Zwischenwelle 9'. Zudem ist das Turbinenrad 16 über eine an einem Gehäuse 13' befestigte Turbinenbremse 12' abbremsbar und arretierbar. Auch das Umlenkrad 17 ist über eine Freilaufkupplung 18 gegenüber dem Gehäuse 13' arretierbar. Die Freilaufkupplung 18 sperrt bei einer Drehung des Umlenkrades 17 entgegen der Drehrichtung der Triebwelle 1 und entsperrt bei einer Drehung des Umlenkrades 17 in Drehrichtung der Triebwelle 1.

Bei einer Zug- oder Schubhochschaltung soll zur Synchronisierung des Zielgangs jeweils das Turbinenrad 6, 16 weitgehend über die Turbinenbremse 12, 12' und die Eingangswelle 3 weitgehend über eine getriebeinterne Synchronisiereinrichtung, d.h. eine der Gangkupplung des Zielgangs zugeordnete Reibsynchronisierung oder eine mit der Eingangswelle 3 in Triebverbindung stehende Getriebebremse, auf die Zieldrehzahl n_{Ziel} abgebremst werden, um eine Überlastung der getriebeinternen Synchronisiereinrichtung zu vermeiden.

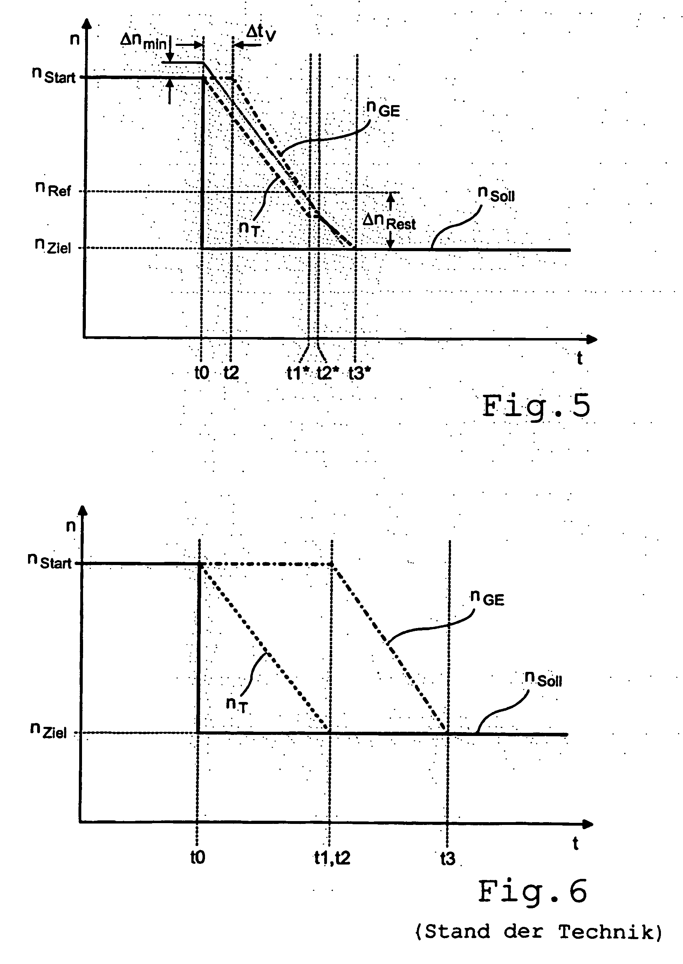

Hierzu ist bislang ein sequenzieller Ablauf vorgesehen, der in Fig. 6 anhand der Drehzahlverläufe des Turbinenrades 6, 16 (Turbinenraddrehzahl n_{T}) und der Eingangswelle 3 des Schaltgetriebes (Eingangswellendrehzahl n_{GE}) veranschaulicht ist. Nach der Ausgabe eines Schaltsignals zur Auslösung einer Hochschaltung erfolgt zunächst ein Lastabbau des von dem Antriebsmotor in die Eingangswelle 3 übertragenen Drehmomentes, z.B. durch eine Reduzierung des von dem Antriebsmotor erzeugten Drehmomentes, durch das Öffnen der Überbrückungskupplung 8, 8' und/oder durch eine Reduzierung des von dem Anfahr- und Bremselement 2, 2' übertragenen Drehmomentes. Danach wird in dem Schaltgetriebe der eingelegte Lastgang weitgehend lastfrei ausgelegt.

Nach dem Auslegen des Lastgangs zum Zeitpunkt t0 springt die Solldrehzahl n_{Soll} des Turbinenrades 6, 16 und der Eingangswelle 3 des Schaltgetriebes von dem Wert der Startdrehzahl n_{Start} vor der Hochschaltung auf den Wert der Zieldrehzahl n_{Ziel} nach der Hochschaltung. In etwa zeitgleich wird die Turbinenbremse 12, 12' eingeschaltet, wodurch das Turbinenrad 6, 16 abgebremst und durch die Entsperrung der Freilaufkupplung 11, 11' von der Eingangswelle 3 entkoppelt wird. Mit Erreichen der Zieldrehzahl n_{Ziel} zum Zeitpunkt t1 wird die Turbinenbremse 12, 12' abgestellt und in etwa zeitgleich (t1 = t2) die getriebeinterne Synchronisiereinrichtung aktiviert, um die Eingangswelle 3 und die mit dieser in Triebverbindung stehenden Getriebewellen auf die Zieldrehzahl n_{Ziel} abzubremsen.

Nach dem Erreichen der Zieldrehzahl n_{Ziel} durch die Eingangswelle 3 zum Zeitpunkt t3 wird der Zielgang weitgehend lastfrei eingelegt und in einem anschließenden Lastaufbau das von dem Antriebsmotor in die Eingangswelle 3 übertragene Drehmoment wieder erhöht. Durch diesen sequenziellen Ablauf der Synchronisierung des Turbinenrades 6, 16 und der Eingangswelle 3 ergibt sich eine ungünstig lange Schaltdauer und insbesondere eine lange Zug- bzw. Schubkraftunterbrechung.

Zur Verkürzung der Schaltdauer und der schaltungsbedingten Zug- oder Schubkraftunterbrechung ist erfindungsgemäß vorgesehen, dass das Abbremsen der Eingangswelle 3 über die getriebeinterne Synchronisiereinrichtung schon während des Abbremsens des Turbinenrades 6, 16 über die Turbinenbremse 12, 12' um einen vorab bestimmten Zeitverzug Δtᵥ nach dem Einschalten der Turbinenbremse begonnen wird, und dass die getriebeinterne Synchronisiereinrichtung während des Abbremsens der Eingangswelle 3 derart angesteuert wird, dass die Eingangswelle 3 bis zum Erreichen einer vorgegebenen Referenzdrehzahl n_{Ref} durch das Turbinenrad 6, 16 eine vorgegebene Mindestdrehzahldifferenz Δnₘᵢₙ zu dem Turbinenrad 6, 16 nicht wesentlich unterschreitet.

Als Referenzdrehzahl n_{Ref} kann entweder die Zieldrehzahl n_{Ziel} der Hochschaltung, definiert durch n_{Ref} = n_{Ziel} oder eine um eine Restdrehzahldifferenz Δn_{Rest} oberhalb der Zieldrehzahl n_{Ziel} gelegene Drehzahl, definiert durch n_{Ref} = n_{Ziel} + Δ_{Rest}, ab der das gemeinsame Abbremsen des Turbinenrades 6, 16 und der Eingangswelle 3 über die getriebeinterne Synchronisiereinrichtung möglich ist, verwendet werden.

Zur Reduzierung des apparativen und steuerungstechnischen Aufwands ist die Turbinenbremse 12, 12' üblicherweise ungeregelt ausgebildet. Somit wird mit dem Einschalten der Turbinenbremse 12, 12' an dem Turbinenrad 6, 16 ein weitgehend konstanter Drehzahlgradient dn_{T}/dt eingestellt, dessen Höhe allerdings in Abhängigkeit relevanter Betriebsparameter, wie z.B. der Betriebstemperatur und des Verschleißzustands der Reibbeläge, variieren kann. Demzufolge muss sich die Bestimmung des Zeitverzugs Δtᵥ bis zur Aktivierung der getriebeinternen Synchronisiereinrichtung und, sofern dieser frei einstellbar ist, auch des Drehzahlgradienten dn_{GE}/dt zum Abbremsen der Eingangswelle an dem Drehzahlgradienten dn_{T}/dt orientieren, mit dem das Turbinenrad 6, 16 durch die Turbinenbremse 12, 12' abgebremst wird.

Demzufolge wird der Zeitverzug Δtᵥ bis zum Beginn des Abbremsens der Eingangswelle 3 über die getriebeinterne Synchronisiereinrichtung auf einen minimalen Zeitverzug Δt_{V_min} festgelegt, wenn der erwartete oder einzustellende Drehzahlgradient dn_{GE}/dt der Eingangswelle 3 absolut kleiner oder gleich dem Drehzahlgradienten dn_{T}/dt des Turbinenrades 6, 16 ist, definiert durch | dn_{GE}/dt | ≤ | dn_{T}/dt |, wenn also die Eingangswelle 3 langsamer oder gleich schnell wie das Turbinenrad 6, 16 abgebremst wird.

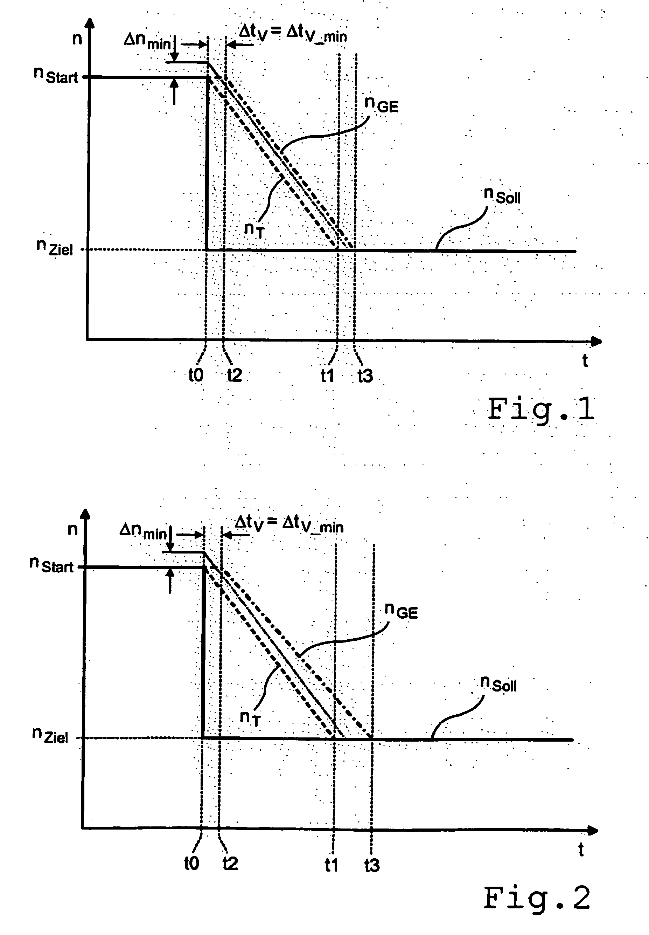

Dies ist in Fig. 1 für den Fall dargestellt, dass der Drehzahlgradient dn_{GE}/dt der Eingangswelle 3 in etwa dem Drehzahlgradienten dn_{T}/dt des Turbinenrades 6, 16 entspricht, definiert durch dn_{GE}/dt = dn_{T}/dt, und in Fig. 2 für den Fall gezeigt, dass der Drehzahlgradient dn_{GE}/dt der Eingangswelle 3 absolut kleiner als der Drehzahlgradient dn_{T}/dt des Turbinenrades 6, 16 ist, definiert durch | dn_{GE}/dt | < | dn_{T}/dt |.

Der minimale Zeitverzug Δt_{V_min} ist so bestimmt, dass die Eingangswelle 3 die Mindestdrehzahldifferenz Δnₘᵢₙ zu dem Turbinenrad 6, 16 zu Beginn der Betätigung der getriebeinternen Synchronisiereinrichtung nicht unterschreitet. Somit ist auch im weiteren Verlauf des Abbremsens des Turbinenrades 6, 16 und der Eingangswelle 3 sichergestellt, dass die Eingangswelle 3 bis zum Erreichen der Zieldrehzahl n_{Ziel} die Mindestdrehzahldifferenz Δnₘᵢₙ zu dem Turbinenrad 6, 16 nicht erreicht oder unterschreitet, und das Turbinenrad 6, 16 somit solange von der Eingangswelle 3 entkoppelt bleibt.

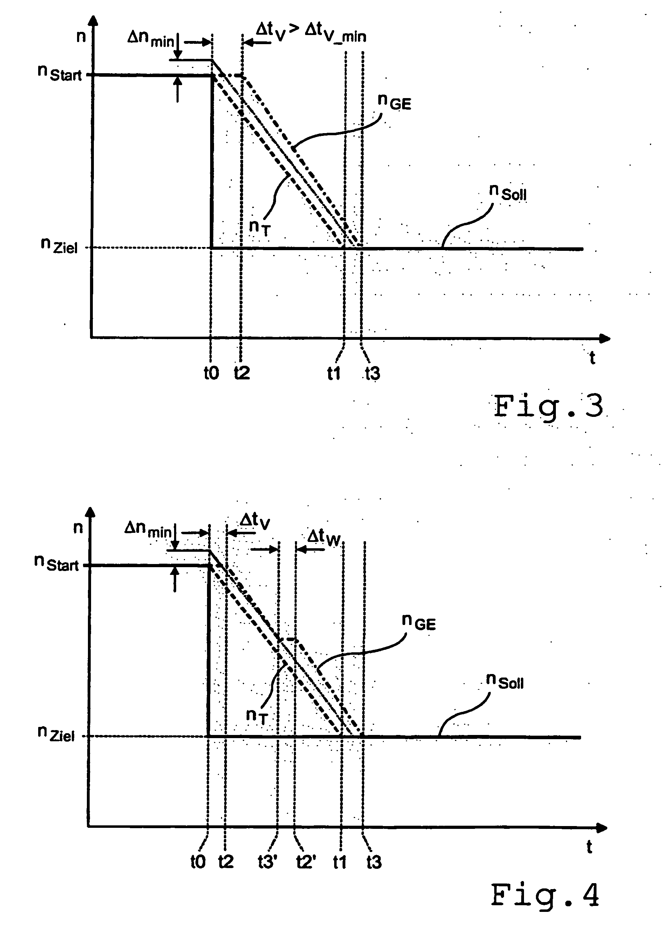

In Fig. 3 ist dagegen dargestellt, dass der Zeitverzug Δtᵥ bis zur Aktivierung der getriebeinternen Synchronisiereinrichtung entsprechend verlängert wird, wenn der erwartete oder einzustellende Drehzahlgradient dn_{GE}/dt der Eingangswelle 3 absolut größer als der Drehzahlgradient dn_{T}/dt des Turbinenrades 6, 16 ist, definiert durch | dn_{GE}/dt | > | dn_{T}/dt |. Hierzu wird der Zeitverzug Δt_{V} zweckmäßig ausgehend von dem minimalen Zeitverzug Δt_{V_min} proportional zur Differenz der beiden Drehzahlgradienten, definiert durch | dn_{GE}/dt - dn_{T}/dt | und der zu überbrückenden Gesamtdrehzahldifferenz (Δn_{ges} = n_{Start} - n_{Ziel}) erhöht. Auch hierdurch wird deutlich erkennbar erreicht, dass die Eingangswelle 3 bis zum Erreichen der Zieldrehzahl n_{Ziel} die Mindestdrehzahldifferenz Δnₘᵢₙ zu dem Turbinenrad 6, 16 nicht erreicht oder unterschreitet.

Falls dies gemäß Fig. 4 jedoch aufgrund bestimmter, seltener Betriebsbedingungen nicht gelingt, d.h. wenn die Eingangswelle 3 die vorgegebene Mindestdrehzahldifferenz Δnₘᵢₙ zu dem Turbinenrad 6, 16 vor dem Erreichen der Referenzdrehzahl n_{Ref} durch das Turbinenrad 6, 16 erreicht oder unterschritten hat, definiert durch n_{GE} ≤ n_{T} + Δnₘᵢₙ, ist vorgesehen, dass die getriebeinterne Synchronisiereinrichtung für eine vorab festgelegte Wartezeit Δt_{w} abgeschaltet und danach wieder auf das vorherige Bremsmoment eingestellt wird. Hierdurch wird der Drehzahlabstand zwischen der Eingangswelle 3 und dem Turbinenrad 6, 16 wieder erhöht und somit ein vorzeitiges Sperren der Freilaufkupplung 11, 11' und das damit verbundene Ankoppeln des Turbinenrades 6, 16 an die Eingangswelle 3 vermieden. Dies ist in Fig. 4 deutlich sichtbar veranschaulicht, wobei die Betätigungspause bzw. die Wartezeit Δt_{w} der getriebeinternen Synchronisiereinrichtung durch die Zeitpunkte t3' und t2' begrenzt ist.

In den in den Figuren 1 bis 4 dargestellten Fallbeispielen ist die zuvor erwähnte Referenzdrehzahl n_{Ref} jeweils identisch mit der Zieldrehzahl n_{Ziel} der jeweiligen Hochschaltung , definiert durch n_{Ref} = n_{Ziel}. Dagegen liegt die verwendete Referenzdrehzahl n_{Ref} in dem in Fig. 5 dargestellten Fallbeispiel um eine Restdrehzahldifferenz Δn_{Rest} oberhalb der Zieldrehzahl n_{Ziel} , definiert durch n_{Ref} = n_{Ziel} + Δn_{Rest}. In diesem Fall werden nach dem Erreichen der Referenzdrehzahl (n_{Ref}) durch das Turbinenrad zunächst das Turbinenrad 6, 16 über die Turbinenbremse 12, 12' und die Eingangswelle 3 über die getriebeinterne Synchronisiereinrichtung weiter abgebremst, bis die Eingangswelle 3 zum Zeitpunkt t1 * die Mindestdrehzahldifferenz Δnₘᵢₙ zu dem Turbinenrad 6, 16 erreicht oder unterschritten hat. Daraufhin wird die Turbinenbremse 12, 12' abgeschaltet. Sobald die Eingangsdrehzahl n_{GE} die Turbinenraddrehzahl n_{T} erreicht hat (Zeitpunkt t2*) und demzufolge das Turbinenrad 6, 16 durch das Sperren der Freilaufkupplung 11, 11' an die Eingangswelle 3 angekoppelt ist, werden das Turbinenrad 6, 16 und die Eingangswelle 3 bis zum Erreichen der Zieldrehzahl n_{Ziel} (Zeitpunkt t3*) für einen vergleichsweise kurzen Zeitraum gemeinsam über die getriebeinterne Synchronisiereinrichtung abgebremst.

### Bezugszeichen

- 1: Triebwelle
- 2, 2': Anfahr- und Bremselement
- 3: Eingangswelle
- 4: Kupplung
- 5: Pumpenrad
- 6: Turbinenrad
- 7, 7': Eingangselement
- 8, 8': Überbrückungskupplung
- 9, 9': Zwischenwelle
- 10, 10': Drehschwingungsdämpfer
- 11, 11': Freilaufkupplung
- 12, 12': Turbinenbremse
- 13, 13': Gehäuse
- 14: Drehmomentwandler
- 15: Pumpenrad
- 16: Turbinenrad
- 17: Umlenkrad
- 18: Freilaufkupplung
- n: Drehzahl
- n_{GE}: Eingangswellendrehzahl
- n_{Ref}: Referenzdrehzahl
- n_{Soll}: Solldrehzahl
- n_{Start}: Startdrehzahl
- n_{T}: Turbinenraddrehzahl
- n_{Ziel}: Zieldrehzahl
- t: Zeit
- t0: Zeitpunkt
- t1: Zeitpunkt
- t1*: Zeitpunkt
- t2: Zeitpunkt
- t2': Zeitpunkt
- t2*: Zeitpunkt
- t3: Zeitpunkt
- t3': Zeitpunkt
- t3*: Zeitpunkt
- dn_{GE}/dt: Drehzahlgradient der Eingangswelle
- dn_{T}/dt: Drehzahlgradient des Turbinenrades
- Δn: Drehzahldifferenz
- Δn_{ges}: Gesamtdrehzahldifferenz
- Δnₘᵢₙ: Mindestdrehzahldifferenz
- Δn_{Rest}: Restdrehzahldifferenz
- Δt: Zeitdifferenz, Zeitraum
- Δt_{V}: Zeitverzug
- Δt_{V_min}: minimaler Zeitverzug
- Δt_{W}: Wartezeit

## Patentansprüche

1. Verfahren zur Schaltsteuerung eines automatisierten Schaltgetriebes, dem ein mit einem Pumpenrad (5, 15) und einem Turbinenrad (6, 16) versehenes hydrodynamisches Anfahr- und Bremselement (2, 2') vorgeschaltet ist, über das die Eingangswelle (3) des Schaltgetriebes mit der Triebwelle (1) eines als Verbrennungsmotor ausgebildeten Antriebsmotors in Verbindung steht, dessen Pumpenrad (5, 15) über eine Überbrückungskupplung (8, 8') unmittelbar mit einer mit der Eingangswelle (3) verbundenen Zwischenwelle (9, 9') verbindbar ist, und dessen Turbinenrad (6, 16) über eine Freilaufkupplung (11, 11') mit der Zwischenwelle (9, 9') verbindbar sowie über eine Turbinenbremse (12, 12') gegenüber einem Gehäuse (13, 13') abbremsbar ist, wobei bei einer Hochschaltung , definiert als Zug- oder Schubhochschaltung, zur Synchronisierung des Zielgangs das Turbinenrad (6, 16) weitgehend über die Turbinenbremse (12, 12') und die Eingangswelle (3) weitgehend über eine getriebeinteme Synchronisiereinrichtung auf die Zieldrehzahl n_{Ziel} abgebremst werden, **dadurch gekennzeichnet, dass** das Abbremsen der Eingangswelle (3) über die getriebeinterne Synchronisiereinrichtung schon während des Abbremsens des Turbinenrades (6, 16) über die Turbinenbremse (12, 12') um einen vorab bestimmten Zeitverzug Δtᵥ nach dem Einschalten der Turbinenbremse (12, 12') begonnen wird, und dass die getriebeinterne Synchronisiereinrichtung während des Abbremsens der Eingangswelle (3) derart angesteuert wird, dass die Eingangswelle (3) bis zum Erreichen einer vorgegebenen Referenzdrehzahl n_{Ref} durch das Turbinenrad (6, 16) eine vorgegebene Mindestdrehzahldifferenz Δnₘᵢₙ zu dem Turbinenrad (6, 16) nicht unterschreiten.

2. Verfahren nach Anspruch 1, **dadurch gekennzeichnet, dass** die Zieldrehzahl n_{Ziel} der Hochschaltung als Referenzdrehzaht n_{Ref} verwendet wird , definiert durch n_{Ref} = n_{Ziel}, und dass nach dem Erreichen der Zieldrehzahl n_{Ziel} durch das Turbinenrad (6, 16) die Turbinenbremse (12, 12') abgeschaltet und die Ein-gangswelle (3) danach bis zum Erreichen der Zieldrehzahl n_{Ziel} weiter über die getriebeinterne Synchronisiereinrichtung abgebremst wird

3. Verfahren nach Anspruch 1, **dadurch gekennzeichnet, dass** eine um eine Restdrehzahldifferenz Δn_{Rest} oberhalb der Zietdrehzahl n_{Ziel} gelegene Drehzahl als Referenzdrehzahl n_{Ref} verwendet wird n_{Ref} = n_{Ziel} + Δn_{Rest}, ab der das gemeinsame Abbremsen des Turbinenrades (6, 16) und der Eingangswelle (3) über die getriebeinterne Synchronisiereinrichtung möglich ist.

4. Verfahren nach Anspruch 3, **dadurch gekennzeichnet, dass** schon nach dem Erreichen der Referenzdrehzahl n_{Ref} durch das Turbinenrad (6, 16) die Turbinenbremse (12, 12') abgeschaltet wird, und das Turbinenrad (6, 16) sowie die Eingangswelle (3) danach bis zum Erreichen der Zieldrehzahl n_{Ziel} gemeinsam über die getriebeinterne Synchronisiereinrichtung abgebremst werden.

5. Verfahren nach Anspruch 3, **dadurch gekennzeichnet, dass** nach dem Erreichen der Referenzdrehzahl n_{Ref} durch das Turbinenrad (6, 16) zunächst das Turbinenrad (6, 16) über die Turbinenbremse (12, 12') und die Eingangswelle (3) über die getriebeinterne Synchronisiereinrichtung weiter abgebremst werden, und dass erst dann, wenn die Eingangswelle (3) die Mindestdrehzahldifferenz Δnₘᵢₙ zu dem Turbinenrad (6, 16) vor Erreichen der Zieldrehzahl n_{Ziel} durch das Turbinenrad (6, 16) erreicht oder unterschritten hat , definiert durch n_{GE} ≤ n_{T} + Δnₘᵢₙ, die Turbinenbremse (12, 12') abgeschaltet wird, und das Turbinenrad (6, 16') und die Eingangswelle (3) danach bis zum Erreichen der Zieldrehzahl n_{Ziel} gemeinsam über die getriebeinterne Synchronisiereinrichtung abgebremst werden.

6. Verfahren nach einem der Ansprüche 1 bis 5, **dadurch gekennzeichnet, dass** der Zeitverzug Δtᵥ bis zum Beginn des Abbremsens der Eingangswelle (3) über die getriebeinterne Synchronisiereinrichtung auf einen minimalen Zeitverzug Δt_{v_min} festgelegt wird, wenn der erwartete oder einzustellende Drehzahtgradient dn_{GE}/dt der Eingangswelle (3) absolut kleiner oder gleich dem Drehzahlgradienten dn_{T}/dt des Turbinenrades (6, 16) ist , definiert durch | dn_{GE}/dt | ≤ | dn_{T}/dt |.

7. Verfahren nach einem der Ansprüche 1 bis 6, **dadurch gekennzeichnet, dass** der Zeitverzug Δtᵥ bei einem erwarteten oder einzustellenden Drehzahlgradienten dn_{GE}/dt der Eingangswelle (3), der absolut größer als der Drehzahlgradient dn_{T}/dt des Turbinenrades (6, 16) ist , definiert durch | dn_{GE}/dt | > | dn_{T}/dt |, ausgehend von dem minimalen Zeitverzug Δt_{v_min} proportional zur Differenz der beiden Drehzahlgradienten , definiert durch | dn_{GE}/dt - dn_{T}/dt | und der zu überbrückenden Gesamtdrehzahldifferenz , definiert durch Δn_{ges} = n_{Start} - n_{Ziel} oder der Drehzahldifferenz , definiert durch Δn = n_{Start} - n_{Ref} zwischen der Startdrehzahl n_{Start} und der Referenzdrehzahl n_{Ref} erhöht wird.

8. Verfahren nach einem der Ansprüche 1 bis 7, **dadurch gekennzeichnet, dass** die getriebeinterne Synchronisiereinrichtung für eine vorab festgelegte Wartezeit Δt_{w} abgeschaltet und danach wieder auf das vorherige Bremsmoment eingestellt wird, wenn die Eingangswelle (3) die vorgegebene Mindestdrehzahldifferenz Δnₘᵢₙ zu dem Turbinenrad (6, 16) vor dem Erreichen der Referenzdrehzahl n_{Ref} durch das Turbinenrad (6, 16) erreicht oder unterschritten hat , definiert durch n_{GE} ≤ n_{T} + Δnₘᵢₙ.

## Claims

1. Method for controlling the shifting of an automated shift transmission, upstream of which a hydrodynamic starting and braking element (2, 2'), which is provided with a pump wheel (5, 15) and a turbine wheel (6, 16), is connected, via which starting and braking element (2, 2') the input shaft (3) of the shift transmission is connected to the drive shaft (1) of a drive motor formed as an internal combustion engine, the pump wheel (5, 15) of which can be connected via a bridging clutch (8, 8') directly to an intermediate shaft (9, 9') connected to the input shaft (3), and the turbine wheel (6, 16) of which can be connected via a freewheel clutch (11, 11') to the intermediate shaft (9, 9') and can be braked via a turbine brake (12, 12') with respect to a housing (13, 13'), wherein in the case of an upshift, defined as a drive or coast upshift, for synchronization of the target gear, the turbine wheel (6, 16) is largely braked via the turbine brake (12, 12') and the input shaft (3) is largely braked via a transmission-internal synchronization device to the target rotational speed n_{Target}, **characterized in that** the braking of the input shaft (3) is already started via the transmission-internal synchronization device during the braking of the turbine wheel (6, 16) via the turbine brake (12, 12') by a predetermined time delay Δtᵥ after the switching on of the turbine brake (12, 12'), and that the transmission-internal synchronization device is actuated during the braking of the input shaft (3) such that the input shaft (3) does not undershoot a defined minimum rotational speed difference Δnₘᵢₙ to the turbine wheel (6, 16) until a defined reference rotational speed n_{Ref} is reached by the turbine wheel (6, 16).

2. Method according to Claim 1, **characterized in that** the target rotational speed n_{Target} of the upshift is used as the reference rotational speed n_{Ref}, defined by n_{Ref} = n_{Target}, and that, after the target rotational speed n_{Target} is reached by the turbine wheel (6, 16), the turbine brake (12, 12') is switched off and thereafter the input shaft (3) is braked further via the transmission-internal synchronization device until the target rotational speed n_{Target} is reached.

3. Method according to Claim 1, **characterized in that** a rotational speed above the target rotational speed n_{Target} by a residual rotational speed difference Δn_{Resid} is used as the reference rotational speed n_{ref}, defined by n_{Ref} = n_{Target} + Δn_{Resid}, from which the joint braking of the turbine wheel (6, 16) and the input shaft (3) via the transmission-internal synchronization device is possible.

4. Method according to Claim 3, **characterized in that**, after the reference rotational speed n_{Ref} is reached by the turbine wheel (6, 16), the turbine brake (12, 12') is switched off, and thereafter the turbine wheel (6, 16) and the input shaft (3) are jointly braked via the transmission-internal synchronization device until the target rotational speed n_{Target} is reached.

5. Method according to Claim 3, **characterized in that**, after the reference rotational speed n_{Ref} is reached by the turbine wheel (6, 16), initially the turbine wheel (6, 16) is braked further via the turbine brake (12, 12') and the input shaft (3) is braked further via the transmission-internal synchronization device, and that only when the input shaft (3) has reached or undershot the minimum rotational speed difference Δnₘᵢₙ to the turbine wheel (6, 16) before the target rotational speed n_{Target} is reached by the turbine wheel (6, 16), defined by n_{GE} ≤ n_{T} + Δnₘᵢₙ, the turbine brake (12, 12') is switched off, and thereafter the turbine wheel (6, 16) and the input shaft (3) are jointly braked via the transmission-internal synchronization device until the target rotational speed n_{Target} is reached.

6. Method according to one of Claims 1 to 5, **characterized in that**, until the start of the braking of the input shaft (3), the time delay Δtᵥ is specified via the transmission-internal synchronization device to a minimum time delay Δt_{v_min} when the rotational speed gradient dn_{GE}/dt, which is expected or is to be set, of the input shaft (3) is absolutely less than or equal to the rotational speed gradient dn_{T}/dt of the turbine wheel (6, 16), defined by |dn_{GE}/dt|≤|dn_{T}/dt|.

7. Method according to one of Claims 1 to 6, **characterized in that** the time delay Δtᵥ, in the case of a rotational speed gradient dn_{GE}/dt, which is expected or is to be set, of the input shaft (3) which is absolutely greater than the rotational speed gradient dn_{T}/dt of the turbine wheel (6, 16), defined by |dn_{GE}/dt|>|dn_{T}/dt|, is increased from the minimum time delay Δt_{v_min} proportional to the difference of both rotational speed gradients, defined by |dn_{GE}/dt - dn_{T}/dt|, and the total rotational speed difference to be bridged, defined by Δn_{Total} = n_{Start} - n_{Target}, or the rotational speed difference, defined by Δn = n_{Start} - n_{Ref}, between the starting rotational speed n_{Start} and the reference rotational speed n_{Ref}.

8. Method according to one of Claims 1 to 7, **characterized in that** the transmission-internal synchronization device is switched off for a previously specified waiting time Δt_{W} and thereafter is set back to the previous braking torque when the input shaft (3) has reached or undershot the defined minimum rotational speed difference Δnₘᵢₙ to the turbine wheel (6, 16) before the reference rotational speed n_{Ref} is reached by the turbine wheel (6, 16), defined by n_{GE} ≤ n_{T} + Δnₘᵢₙ.

## Revendications

1. Procédé de commande de changement de vitesse d'une boîte de vitesses automatisée, en amont de laquelle est monté un élément de démarrage et de freinage (2, 2') hydrodynamique muni d'un rotor de pompe (5, 15) et d'un rotor de turbine (6, 16), par le biais duquel élément l'arbre d'entrée (3) de la boîte de vitesses est en liaison avec l'arbre d'entraînement (1) d'un moteur d'entraînement réalisé sous forme de moteur à combustion interne, dont le rotor de pompe (5, 15) peut être connecté par le biais d'un embrayage de pontage (8, 8') directement à un arbre intermédiaire (9, 9') connecté à l'arbre d'entrée (3), et dont le rotor de turbine (6, 16) peut être connecté par le biais d'un embrayage de roue libre (11, 11') à l'arbre intermédiaire (9, 9') et peut être freiné par le biais d'un frein de turbine (12, 12') par rapport à un boîtier (13, 13'), dans lequel, en cas de passage à une vitesse supérieure, défini comme passage à la vitesse supérieure en traction ou en poussée, pour la synchronisation du rapport cible, le rotor de turbine (6, 16) est freiné principalement par le biais du frein de turbine (12, 12') et l'arbre d'entrée (3) est freiné principalement par le biais d'un dispositif de synchronisation, interne à la transmission, au régime cible n_{Ziel}, **caractérisé en ce que** le freinage de l'arbre d'entrée (3) est déjà commencé, par le biais du dispositif de synchronisation interne à la transmission, pendant le freinage du rotor de turbine (6, 16) par le biais du frein de turbine (12, 12') avec un retard Δtᵥ déterminé préalablement, après l'activation du frein de turbine (12, 12'), et **en ce que** le dispositif de synchronisation interne à la transmission est commandé, pendant le freinage de l'arbre d'entrée (3), de telle sorte que l'arbre d'entrée (3), tant que le rotor de turbine (6, 16) n'a pas atteint un régime de référence prédéfini n_{Ref}, ne descende pas en dessous d'une différence de régime minimale prédéfinie Δnₘᵢₙ par rapport au rotor de turbine (6, 16).

2. Procédé selon la revendication 1, **caractérisé en ce que** le régime cible n_{Ziel} du passage à une vitesse supérieure est utilisé en tant que régime de référence n_{Ref}, défini par n_{Ref} = n_{Ziel}, et **en ce qu'**après que le rotor de turbine (6, 16) a atteint le régime cible n_{Ziel}, le frein de turbine (12, 12') est déconnecté et l'arbre d'entrée (3) est ensuite freiné davantage par le biais du dispositif de synchronisation interne à la transmission, jusqu'à ce que le régime cible n_{Ziel} soit atteint.

3. Procédé selon la revendication 1, **caractérisé en ce que** l'on utilise en tant que régime de référence n_{Ref} un régime supérieur au régime cible n_{Ziel} d'une différence de régime résiduelle Δn_{Rest}, n_{Ref} = n_{Ziel} + Δn_{Rest}, à partir duquel le freinage commun du rotor de turbine (6, 16) et de l'arbre d'entrée (3) par le biais du dispositif de synchronisation interne à la transmission est possible.

4. Procédé selon la revendication 3, **caractérisé en ce que** le frein de turbine (12, 12') est déconnecté dès que le rotor de turbine (6, 16) a atteint le régime de référence n_{Ref}, et le rotor de turbine (6, 16) ainsi que l'arbre d'entrée (3) sont ensuite freinés en commun par le biais du dispositif de synchronisation interne à la transmission jusqu'à ce que le régime cible n_{Ziel} soit atteint.

5. Procédé selon la revendication 3, **caractérisé en ce qu'**après que le rotor de turbine (6, 16) a atteint le régime de référence n_{Ref}, le rotor de turbine (6, 16) est d'abord freiné davantage par le biais du frein de turbine (12, 12') et l'arbre d'entrée (3) est freiné davantage par le biais du dispositif de synchronisation interne à la transmission, et **en ce que** lorsque l'arbre d'entrée (3) a atteint, ou est descendu en dessous de, la différence de régime minimale prédéfinie Δnₘᵢₙ par rapport au rotor de turbine (6, 16), définie par n_{GE} ≤ n_{T} + Δnₘᵢₙ, avant que le rotor de turbine (6, 16) n'ait atteint le régime cible n_{Ziel}, le frein de turbine (12, 12') est déconnecté, et le rotor de turbine (6, 16) et l'arbre d'entrée (3) sont ensuite freinés en commun par le biais du dispositif de synchronisation interne à la transmission jusqu'à ce que le régime cible n_{Ziel} soit atteint.

6. Procédé selon l'une quelconque des revendications 1 à 5, **caractérisé en ce que** le retard Δtᵥ jusqu'au début du freinage de l'arbre d'entrée (3) par le biais du dispositif de synchronisation interne à la transmission est fixé à un retard minimal, Δt_{v_min}, quand le gradient de régime attendu ou à ajuster dn_{GE}/dt de l'arbre d'entrée (3) est inférieur ou égal, en valeur absolue, au gradient de régime dn_{T}/dt du rotor de turbine (6, 16), défini par |dn_{GE}/dt| ≤ |dn_{T}/dt|.

7. Procédé selon l'une quelconque des revendications 1 à 6, **caractérisé en ce que** le retard Δtᵥ, dans le cas d'un gradient de régime attendu ou à ajuster dn_{GE}/dt de l'arbre d'entrée (3), qui est supérieur en valeur absolue au gradient de régime d'entraînement/dt du rotor de turbine (6, 16), défini par |dn_{GE}/dt| > |dn_{T}/dt|, est augmenté depuis le retard minimal Δt_{V_min} de manière proportionnelle à la différence des deux gradients de régime, définis par |dn_{GE}/dt - dn_{T}/dt| et à la différence de régime totale à surmonter, définie par Δn_{ges} = n_{Start} - n_{Ziel}, ou à la différence de régime définie par Δn = n_{Start} - n_{Ref}, entre le régime de départ n_{Start} et le régime de référence n_{Ref}.

8. Procédé selon l'une quelconque des revendications 1 à 7, **caractérisé en ce que** le dispositif de synchronisation interne à la transmission est déconnecté pendant un temps d'attente Δt_{w} fixé préalablement, et est ensuite à nouveau ajusté au couple de freinage préalable lorsque l'arbre d'entrée (3) atteint ou passe en dessous de la différence de régime minimale prédéfinie Δnₘᵢₙ par rapport au rotor de turbine (6, 16) avant que le rotor de turbine (6, 16) n'ait atteint le régime de référence n_{Ref}, comme défini par n_{GE} ≤ n_{T} + Δnₘᵢₙ.
